Europäisches Patentamt

European Patent Office

Office européen des brevets

(19)

(11) Numéro de publication : **0 098 227**
**B1**

(12) **FASCICULE DE BREVET EUROPÉEN**

(45) Date de publication du fascicule du brevet :
02.01.86

(51) Int. Cl.⁴ : **B 65 G 15/02**

(21) Numéro de dépôt : **83420079.2**

(22) Date de dépôt : **04.05.83**

(54) Transporteur à bande courbe.

(30) Priorité : **25.06.82 FR 8211438**

(43) Date de publication de la demande :
**11.01.84 Bulletin 84/02**

(45) Mention de la délivrance du brevet :
**02.01.86 Bulletin 86/01**

(84) Etats contractants désignés :
**AT BE CH DE GB IT LI LU NL SE**

(56) Documents cités :
**GB-A-  960 133**
**GB-A- 1 012 253**
**NL-A- 7 600 514**

(73) Titulaire : **Etablissements REVEYRON**
**Route du Mas Rillier Les Echets**
**F-01700 Miribel (FR)**

(72) Inventeur : **Emery, Pierre**
**Lieudit Pilherbe Fleurieux Sur l'Arbresle**
**F-69210 l'Arbresle (FR)**

(74) Mandataire : **Maureau, Pierre**
**Cabinet GERMAIN & MAUREAU B.P. 11**
**F-69392 Lyon Cedex 03 (FR)**

Jouve, 18, rue St-Denis, 75001 Paris, France

## Description

La présente invention concerne un transporteur à bande courbe, c'est-à-dire du type comprenant une bande sans fin façonnée en tronc de cône et tendue entre deux rouleaux coniques formant entre eux un angle déterminé par l'arc correspondant au trajet du transporteur.

Dans ce type de transporteur, la difficulté essentielle réside dans la tenue en place de la bande formant un arc de cercle entre deux rouleaux coniques qui tendent à l'expulser et aucun des moyens actuellement mis en œuvre pour maintenir la bande en place ne donne totalement satisfaction.

On connaît bien, notamment par les brevets NL-7 600 514 et GB-1 012 253, des transporteurs dans chacun desquels, d'une part, le long des bords extérieurs de chaque brin supérieur et inférieur de la bande et à l'intérieur de celle-ci, c'est-à-dire entre les extrémités de grand diamètre des rouleaux coniques, il est prévu une frette suivant le parcours du bord précité et, d'autre part, le long du bord le plus long de la bande, c'est-à-dire le long de son bord correspondant au grand arc de cercle du transporteur, sont fixés des organes de retenue présentant une face d'appui normale à la bande et aptes à prendre appui contre le bord extérieur de la frette précitée pour assurer le maintien en place de la bande.

Dans le transporteur décrit dans le brevet NL-7 600 514, certains des organes de retenue sont constitués par des galets d'axes verticaux portés par des plaques fixées au bord considéré de la bande de manière que leur partie supportant un axe de galet soit en saillie par rapport audit bord.

Selon l'invention, il est prévu, dans un transporteur selon le document NL cité, coaxialement aux rouleaux coniques, et du côté de leur extrémité de grand diamètre, un disque apte à servir de surface d'appui aux organes de retenue entre les extrémités des frettes correspondant au rouleau considéré.

Dans ce cas, avantageusement, la partie de la frette qui sert de chemin de roulement aux galets est constituée par le fond d'une gorge de largeur légèrement supérieure à celle des galets. Cette disposition a l'avantage d'éviter que les galets ne puissent échapper à la frette, ce que la souplesse naturelle de la bande ne peut empêcher.

Pour empêcher cet échappement, au droit de chacun des rouleaux coniques et bien que, dans cette zone, le cintrage qu'elle subit procure à la bande une certaine rigidité, il est prévu un guide extérieur en forme de demi-cercle et enveloppant la partie du disque d'appui contre laquelle prennent appui les organes de retenue fixés au bord de la bande.

Suivant encore une autre caractéristique de l'invention visant à éviter toute déformation locale de la bande, la fixation à son bord des pattes supportant les galets est assurée par au moins deux rivets disposés symétriquement par rapport à un plan normal à la bande et passant par l'axe du galet considéré.

De toute façon, l'invention sera bien comprise à l'aide de la description qui suit en référence au dessin schématique annexé représentant, à titre d'exemple non limitatif, une forme d'exécution de ce transporteur :

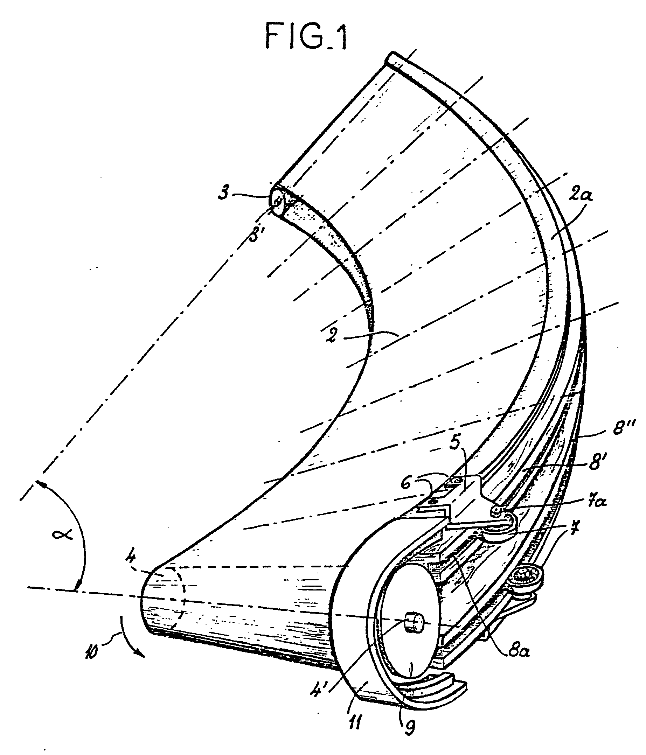

Figure 1 en est une vue en perspective ;

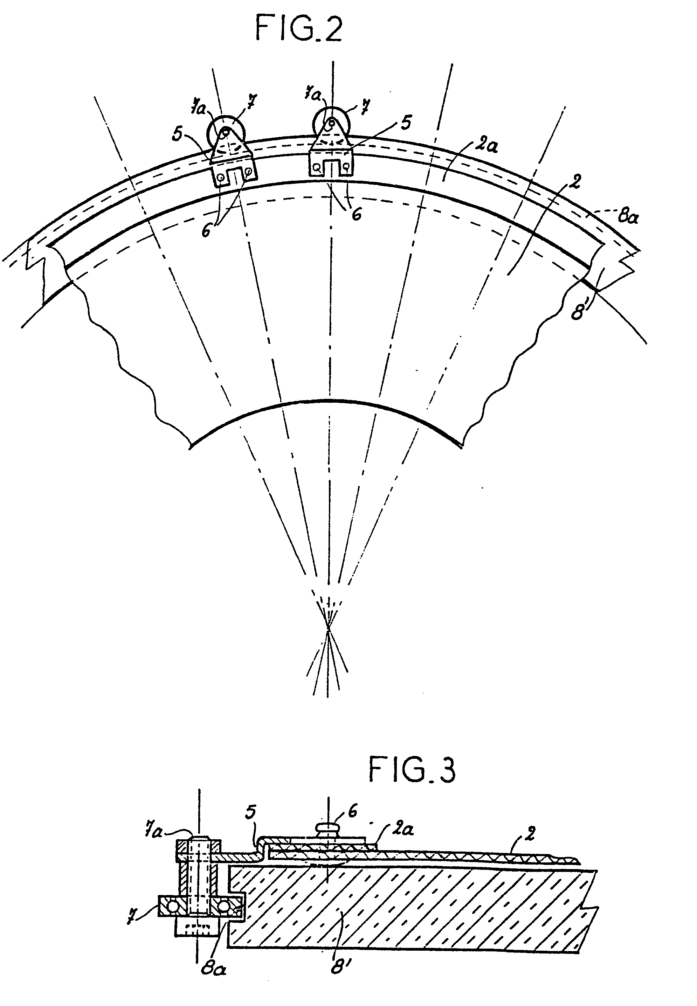

Figure 2 en est une vue partielle en plan pardessus ; et

Figure 3 en est une vue en coupe suivant 3-3 de figure 2.

Le transporteur de l'invention est du type comportant une bande sans fin (2) façonnée en tronc de cône et tendue entre deux rouleaux coniques d'extrémité (3) et (4), dont les axes forment entre eux un angle alpha déterminé par l'arc de cercle correspondant au trajet du transporteur.

On conçoit aisément qu'en raison de la forme conique des rouleaux d'extrémité (3) et (4) et de la bande sans fin (2) et de la tension à laquelle cette dernière est nécessairement soumise pour le bon fonctionnement du transporteur, les rouleaux d'extrémité (3) et (4) tendent à expulser la bande sans fin (2) en direction de son bord intérieur, c'est-à-dire de son bord décrivant le plus petit arc de cercle.

Les moyens de l'invention visent à empêcher cette expulsion. A cet effet, le long du bord extérieur de la bande sans fin (2), c'est-à-dire celui décrivant le plus grand arc de cercle, est fixé un renfort (2a) supportant, avec le bord précité, des plaques (5) qui lui sont fixées par des rivets (6), boulons ou similaire. Chaque plaque (5) présente un prolongement extérieur en saillie sur le bord considéré de la bande (2) et supportant un axe vertical (7a) sur lequel est monté un galet (7).

Par ailleurs, le long de chacun des bords extérieurs des deux brins supérieur et inférieur de la bande (2) et du côté de la face interne dudit brin, une frette, respectivement (8') et (8"), dont la face interne est destinée à servir de face d'appui ou face de roulement aux galets précités (7), de manière à assurer la retenue de la bande (2) sur les rouleaux (3) et (4), malgré l'effet d'expulsion précité. Les frettes (8') et (8") sont donc disposées entre les rouleaux d'extrémité (3) et (4) et du côté du grand diamètre de ces derniers.

Comme le montre le dessin, chaque frette (8') et (8") présente avantageusement une gorge (8a) dont le fond constitue la piste de roulement des galets (7). Cette disposition présente l'avantage de s'opposer à tout échappement intempestif du galet (7) hors d'une frette (8') ou (8"), cet échappement n'étant pas empêché par la bande (2) qui est nécessairement réalisée en un matériau souple. Cette bande est généralement réalisée en PVC normal ou en PVC alimentaire, en caoutchouc, en nitrile, en polyuréthane ou autre matériau approprié.

Sur chaque arbre (3') (4') d'un rouleau conique d'extrémité (3) ou (4), est calé, du côté de son extrémité de grand diamètre, un disque (9) de soutien des galets (7) lorsqu'ils passent de la frette (8') à la frette (8"), au cours du déplacement de la bande (2) dans le sens de la flèche (10). Les disques (9) prennent donc en quelque sorte, la relève des frettes (8') et (8") pour assurer la retenue de la bande (2).

Etant donné qu'il n'est pas possible de prévoir une gorge circulaire sur chaque disque (9), puisqu'une telle gorge ne présenterait pas d'entrée possible pour les galets (7), le maintien des galets (7) sur chaque disque (9) est assuré par un guide extérieur (11) enveloppant la demie-circonférence de chaque disque (9) situé à l'opposé des frettes (8') et (8").

Il faut noter enfin que pour éliminer tout risque de déformation du bord extérieur de la bande (2) dans la zone de fixation des plaques (5), cette fixation est assurée par deux rivets (6) formant, avec l'axe (7a) du galet (7) correspondant, un triangle isocèle, c'est-à-dire disposés de part et d'autre d'un plan vertical passant par l'axe (7a) et orientés normalement à la bande (2).

On peut noter que les moyens de retenue de la bande (2) de ce transporteur présentent l'avantage de permettre l'adoption d'une transmission par chaîne ou courroie crantée disposée à l'intérieur du bâti du transporteur, évitant l'obligation de mettre en place un carter extérieur proéminant.

Comme il va de soi et comme il ressort de ce qui précède, l'invention ne se limite pas à la seule forme d'exécution de ce transporteur qui a été décrite ci-dessus à titre d'exemple non limitatif ; elle en embrasse, au contraire, toutes les variantes de réalisation.

C'est ainsi que, par exemple, les disques (9) calés sur les arbres (3') et (4') des rouleaux d'extrémité (3) et (4) pourraient être supprimés et remplacés par un prolongement en arc de cercle des frettes (8') et (8") se rejoignant bout à bout, ce qui rendrait inutile la présence des guides (11).

**Revendications**

1. Transporteur à bande courte, du type comprenant une bande sans fin (2), façonnée en tronc de cône et tendue entre deux rouleaux coniques (3, 4) formant entre eux un angle (α) déterminé par l'arc de cercle correspondant au trajet du transporteur et dans lequel, le long des bords extérieurs de chaque brin supérieur et inférieur de la bande (2), c'est-à-dire entre les extrémités de grand diamètre des rouleaux coniques (3, 4), il est prévu une frette (8', 8") suivant le parcours du bord précité de la bande et destinée à servir d'appui à des organes de retenue portés par le bord considéré de la bande, et dont chacun est constitué par un galet (7) dont l'axe vertical (7a) est porté par une plaque (5) fixée au bord considéré de la bande (2) de manière que sa partie supportant l'axe (7a) soit en saillie par rapport audit bord, chaque frette (8', 8") étant placée du côté de la face du brin considéré de la bande (2) en regard de l'autre brin, c'est-à-dire à l'intérieur de la bande et les organes de retenue fixés le long du bord le plus long de la bande (2), c'est-à-dire le long de son bord correspondant au grand arc de cercle du tapis transporteur, étant disposés de manière à présenter une face d'appui perpendiculaire à la face intérieure de la bande et en saillie par rapport à cette face de manière à pouvoir prendre appui contre le bord extérieur de la frette (8', 8") précitée et assurer ainsi le maintien en place de la bande (2), caractérisé en ce qu'il est prévu, coaxialement aux rouleaux coniques (3, 4) et du côté de leur extrémité de grand diamètre, un disque (9) apte à servir de surface d'appui aux organes de retenue (5, 7) entre les extrémités des frettes (8', 8") correspondant au rouleau considéré.

2. Transporteur à bande selon la revendication 1, caractérisé en ce que la partie de la frette (8', 8") qui sert de chemin de roulement aux galets (7) est constituée par le fond (8a) d'une gorge de largeur légèrement supérieure à celle des galets (7).

3. Transporteur à bande selon la revendication 1 ou la revendication 2, caractérisé en ce qu'au droit de chacun des rouleaux coniques (3, 4), il est prévu un guide extérieur (11) en forme de demi-cercle et enveloppant la partie du disque d'appui (9) contre laquelle prennent appui les organes de retenue (5, 7) fixés au bord de la bande (2).

4. Transporteur à bande selon l'une quelconque des revendications 1 à 3, caractérisé en ce que la fixation au bord extérieur de la bande (2) des plaques (5) supportant les galets (7) est assurée par au moins deux boulons, rivets ou autres similaires (6) disposés symétriquement par rapport à un plan normal à la bande (2) et contenant l'axe (7a) du galet considéré.

5. Transporteur à bande selon l'une quelconque des revendications précédentes, caractérisé en ce que le bord extérieur de la bande (2) auquel sont fixés les organes de retenue (5, 7) est muni d'un renfort (2a).

**Claims**

1. A conveyor having a curved belt, of the type comprising an endless belt (2) having a frusto-conical shape and tensioned between two conical rollers (3, 4) between which there is formed an angle (α) determined by the circular arc corresponding to the path of the conveyor and in which, along the external edges of each upper and lower section of the belt (2), i. e. between the large diameter ends of the conical rollers (3, 4), there is provided an edging (8', 8") following the path of the above mentioned edge of the belt and intended to act as a support for holding members carried by this edge of the belt, each of which is formed by a roller (7), the vertical spindle (7a) of which is carried by a plate (5) fixed to the said edge of the belt (2) such that its portion supporting the spindle (7a) projects with respect to the said edge, each edging (8', 8") being disposed on the side of the face of a section of the belt (2) so as to face the other section i. e. internally with respect to the belt, the holding members fixed along the longest edge of the belt (2), i. e. along its edge corresponding to the main circular arc of the conveyor belt, being disposed in such a way as to form a support face perpendicular to the internal face of the belt and projecting with respect to this face in such a way as to be supported on the external edge of the edging (8', 8") and thus to hold the belt (2) in place, characterised in that coaxially to the conical rollers (3, 4) and on the side of their large diameter end, there is provided a disc (9) suitable to act as a support surface for the holding members (5, 7) between the ends of the edgings (8', 8") corresponding to a particular roller.

2. A conveyor belt as claimed in Claim 1, characterised in that the portion of the edging (8', 8") which acts as a rollway for the rollers (7) is formed by the base (8a) of a throat having a width slightly greater than that of the rollers (7).

3. A conveyor belt as claimed in Claim 1 or 2, characterised in that at right angles to each of the conical rollers (3, 4) there is provided an external guide (11) having a semicircular shape and enveloping the portion of the support disc (9) against which the holding members (5, 7) fixed to the edge of the belt (2) are supported.

4. A conveyor belt as claimed in any one of Claims 1 to 3, characterised in that the fastening of the plates (5) supporting the rollers (7) to the external edge of the belt (2) takes place by means of at least two bolts, rivets or the like (6) disposed symmetrically with respect to a plane perpendicular to the belt (2) and containing the spindle (7a) of a particular roller.

5. A conveyor belt as claimed in any one of the preceding claims, characterised in that the external edge of the belt (2) to which the holding members (5, 7) are fixed is provided with a reinforcement (2a).

**Patentansprüche**

1. Förderer mit bogenförmigen Band mit einem endlosen Band (2), das die Form eines Kegelstumpfmantels hat und zwischen zwei konischen Rollen (3, 4) gespannt ist, die miteinander einen Winkel (α) bilden, der durch den der Bewegungsbahn des Förderers entsprechenden Kreisbogen bestimmt ist, wobei längs des äußeren Randes des oberen und des unteren Trums des Bandes (2), d. h. zwischen den Enden großen Durchmessers der konischen Rollen (3, 4) ein dem Verlauf des genannten Randes des Bandes folgender Stützring (8', 8") vorgesehen ist, der zur Abstützung von Halterungsorganen dient, die von dem betreffenden Rand des Bandes (2) getragen sind und die jeweils aus einer Walze (7) bestehen, deren vertikale Achse (7a) von einer Platte (5) getragen ist, welche an dem betreffenden Rand des Bandes (2) derart fixiert ist, daß sein die Achse (7a) tragender Teil gegenüber dem genannten Rand hervorsteht, wobei jeder Stützring (8', 8") auf der dem jeweils anderen Trum gegenüberliegenden Seite des betreffenden Trums des Bandes (2), d. h. im Innern des Bandes angeordnet ist, und wobei die längs des längeren Randes des Bandes (2), d. h. längs seines dem großen Kreisbogen des Bandförderers entsprechenden Randes fixierten Halterungsorgane so angeordnet sind, daß sie eine senkrecht zur Innenseite des Bandes ausgerichtete Stützfläche bilden, die über diese Seite derart herausragt, daß sie sich gegen den äußeren Rand des genannten Stützringes (8', 8") abstützen und somit das Band (2) an seiner Stelle halten kann, dadurch gekennzeichnet, daß koaxial zu den konischen Rollen (3, 4) auf der Seite ihres Endes mit größerem Durchmesser eine Scheibe (9) vorgesehen ist, die den Halterungsorganen (5, 7) zwischen den der jeweiligen Rolle zugeordneten Enden der Ringe (8', 8") als Stützfläche dienen kann.

2. Förderer nach Anspruch 1, dadurch gekennzeichnet, daß der Teil des Stützringes (8', 8"), der den Walzen (7) als Wälzbahn dient, von dem Boden (8a) einer Nut gebildet ist, deren Breite geringfügig größer ist als die Breite der Walzen (7).

3. Förderer nach Anspruch 1 oder 2, dadurch gekennzeichnet, daß an dem Ort jeder konischen Rolle (3, 4) eine halbkreisförmige äußere Führung (11) vorgesehen ist, die den Teil der Stützscheibe (9) umschließt, gegen welche sich die an dem Rand des Bandes (2) befestigten Halterungsorgane (5, 7) abstützen.

4. Förderer nach einem der Ansprüche 1 bis 3, dadurch gekennzeichnet, daß die Befestigung der die Walzen (7) tragenden Platten (5) an dem äußeren Rand des Bandes (2) durch wenigstens zwei Schraubenbolzen, Nieten (6) oder dgl. erfolgt, die in Bezug auf eine senkrecht zu dem Band (2) verlaufende und die Achse (7a) des betreffenden Walze (7) enthaltende Ebene symmetrisch angeordnet sind.

5. Förderer nach einem der vorhergehenden Ansprüche, dadurch gekennzeichnet, daß der äußere Rand des Bandes (2), an dem die Halterungsorgane (5, 7) befestigt sind, mit einer Verstärkung (2a) versehen ist.

# FIG.1

# FIG.2

# FIG.3